# FASCICULE DE BREVET EUROPEEN

(11) **EP 3 271 308 B1**
(45) Date de publication et mention de la délivrance du brevet: **07.08.2024**
(21) Numéro de dépôt: 16715015.0
(22) Date de dépôt: 15.03.2016
(51) Int. Cl.: C04B 28/14

(54) **PLAQUE ACOUSTIQUE A BASE DE PLÂTRE**
SCHALLSCHLUCKPLATTE AUF GIPSBASIS
PLASTER-BASED ACOUSTIC PANEL

(30) Priorité: 17.03.2015 FR 1552177
(43) Date de publication de la demande: 24.01.2018
(73) Titulaire: SAINT-GOBAIN PLACO, 92400 Courbevoie (FR)
(72) Inventeur: CHUDA, Katarzyna, 92600 Asnieres sur Seine (FR); DEMATHIEU-ROELTGEN, Caroline, 77100 Meaux (FR); PEREZ, Sylvie, 92600 Asnieres sur Seine (FR)
(74) Mandataire: Saint-Gobain Recherche
(86) Numéro de dépôt international: PCT/FR2016/050570
(87) Numéro de publication internationale: WO 2016/146934

(56) Documents cités:
- EP-A1- 1 947 070
- EP-A2- 1 847 318
- WO-A1-2011/095634
- WO-A1-2014/154597
- WO-A1-2014/204149
- WO-A2-2009/015156
- US-A1- 2010 129 643
- US-A1- 2013 074 737

## Description

L'invention se rapporte à l'utilisation d'un matériau particulaire présentant une porosité supérieure à 5 % et inférieure ou égale à 60 % et des pores ayant un diamètre qui varie de 1 à 100 nanomètres dans une composition à base de gypse calciné destinée à la fabrication d'une plaque à base de plâtre, pour améliorer le confort acoustique, dans laquelle le matériau particulaire représente 0,001 à 50 % en poids du mélange constitué par le plâtre et le matériau particulaire, et le matériau particulaire est inorganique choisi parmi les charbons actifs et les carbonates, ou organique.

La notion de « confort acoustique » est une notion subjective. Cependant, il est généralement admis qu'un confort acoustique satisfaisant se traduit par une bonne intelligibilité des sons tels que les voix humaines et la musique, un temps de réverbération suffisamment long pour éviter la sensation de sons étouffés et suffisamment court pour prévenir un écho résiduel trop marqué, et l'absence de sons à puissance sonore importante.

Le confort acoustique doit être distingué de l'isolation acoustique. Lorsqu'un son rencontre un obstacle, par exemple une paroi d'un bâtiment, une partie de l'énergie sonore incidente est réfléchie, une autre est absorbée et une autre est transmise par l'obstacle. L'isolation acoustique vise à réduire la transmission du son alors que l'amélioration du confort acoustique a pour but d'augmenter l'absorption du son par l'obstacle pour diminuer la composante réfléchie.

L'isolation acoustique est exprimée par un gain acoustique relatif par rapport à une référence.

Les paramètres les plus utilisés pour évaluer la qualité du confort acoustique sont le temps de réverbération et le coefficient d'absorption acoustique sous incidence normale, noté αₙ. Ce dernier est défini comme étant le rapport de l'énergie acoustique absorbée par un matériau donné à l'énergie acoustique incidente. Le coefficient αₙ est déterminé par la méthode utilisant un tube d'impédance, ou Tube de Kundt, décrite dans la norme ISO 10534.

L'absorption et l'isolation acoustique sont des caractéristiques difficiles à atteindre dans le même produit car des phénomènes très distincts sont mis en jeux.

Afin d'améliorer l'isolation acoustique il est bien connu que la densité et l'épaisseur des matériaux sont les paramètres critiques. L'ajout d'un matériau poreux et fin en surface n'est d'aucune efficacité.

L'absorption, quant à elle, est facilitée dans des substrats poreux non recouverts. L'absorption acoustique sur un plâtre projeté ou un enduit par exemple est facilitée grâce à sa grande porosité ouverte et interconnectée.

Le document US 2013/074737 A1 décrit l'utilisation de vermiculite ou perlite pour améliorer les propriétés acoustiques d'une plaque à base de plâtre calcinée disposée entre deux feuilles de papier ou de non-tissé. Ce document ne concerne pas le confort acoustique évoqué précédemment.

Les plaques à base de plâtre sont généralement utilisées pour la réalisation de parements muraux, de plafonds et de plancher, ainsi que de cloisons de séparation. Il s'agit de plaques composites comprenant une âme en plâtre disposée entre deux couches de papier ou de non-tissé constitué de fibres de verre ou d'un polymère. Ces plaques possèdent des propriétés mécaniques qui répondent aux normes en vigueur, en particulier une bonne résistance à la flexion sous charge.

Les plaques à base de plâtre en tant que telles ne présentent pas de performances acoustiques particulières. Lorsqu'on souhaite améliorer ces performances, il est connu d'associer à ladite plaque un matériau isolant phonique tel qu'une laine de verre ou de roche ou un polymère, pour former un produit composite qui peut être maintenu en place au moyen de profilés, d'une colle, de vis ou de chevilles selon l'usage visé.

Les plaques à base de plâtre les plus usuelles ont une épaisseur moyenne de 12,5 mm et sont commercialisées généralement sous la dénomination « BA 13 ». Ces plaques présentent une masse surfacique de l'ordre de 9 kg/m². Il est certes bien connu que l'on peut améliorer les performances acoustiques d'une plaque en augmentant sa masse surfacique, par exemple jusqu'à 12 kg/m², voire 15 kg/m², sans modifier son épaisseur, mais cela se traduit nécessairement par une augmentation de la quantité de plâtre dans la plaque. L'augmentation du poids de la plaque présente des inconvénients : la pose est plus difficile, notamment quand celle-ci doit être fixée en hauteur, en particulier au plafond, la fixation par vis est plus ardue du fait que la plaque est plus dense, et le coût de la plaque est aussi plus élevé.

La présente invention a pour but de fournir une plaque à base de plâtre qui présente des propriétés acoustiques améliorées à la fois du point de vue de l'isolation acoustique et du confort acoustique, tout en conservant de bonnes propriétés mécaniques.

Notamment, on cherche à obtenir une plaque à base de plâtre dont les propriétés acoustiques sont au moins équivalentes à celles d'une plaque classique de même épaisseur mais de masse surfacique plus élevée, de l'ordre de 12 kg/m². La masse surfacique plus particulièrement visée par l'invention est de l'ordre de 9 kg/m².

Ce but est atteint selon l'invention grâce à l'utilisation d'un matériau particulaire, conformément à la revendication 1. Le matériau particulaire est de préférence réparti de manière homogène dans l'âme en plâtre de la plaque de plâtre.

Plus précisément, la plaque comprend du plâtre et un matériau particulaire inorganique et/ou organique ayant les caractéristiques de porosité et de diamètre de pore précitées, de préférence inorganique, et mieux encore choisi parmi les charbons actifs et les carbonates, notamment les carbonates de calcium.

A titre d'exemple de matériau particulaire organique, on peut citer les polymères obtenus à partir d'au moins un monomère choisi parmi les (méth)acrylates, notamment le butyl (méth)acrylate, l'hexyl acrylate, l'hydroxyméthyl méthacrylate, l'éthylène diméthacrylate, le 1,3-butanediol diacrylate, le 1,4-butanediol diacrylate, le triméthylolpropane triméthacrylate et le glycidyl méthacrylate; le styrène et les divinylbenzènes.

On préfère les copolymères contenant au moins un monomère acrylate.

De manière bien connue, les polymères précités sont obtenus par polymérisation thermique en présence d'un amorceur, par exemple le 2,2'-azo-bis-isobutyronitrile, ou sous rayonnement ultraviolet.

Comme mentionné précédemment, la porosité du matériau particulaire est au moins égale à 5 % mesurée selon la méthode ISO 15901-1:2005, et inférieure ou égale à 60 %, et avantageusement varie de 8 à 40 %.

Le diamètre moyen des pores du matériau particulaire conforme à l'invention est compris entre 1 et 100 nanomètres, de préférence entre 1 et 90 nanomètres et avantageusement entre 5 et 80 nanomètres. Au sens de la présente invention, on entend par diamètre des pores, le diamètre moyen des pores mesuré selon ISO 15901-2:2005.

Le matériau particulaire préféré se présente sous la forme d'une poudre constituée de particules ayant une taille comprise entre 1 micromètre et 1 millimètre et avantageusement entre 10 et 600 micromètres.

Le matériau particulaire représente 0,001 à 50 % en poids du mélange constitué par le plâtre et le matériau particulaire, de préférence 0,1 à 40 %, avantageusement 1 à 30 % et mieux encore 2 à 20 %.

L'âme de la plaque selon l'invention peut contenir en outre des additifs qui améliorent les propriétés physico-chimiques du produit final et permettent d'obtenir de bonnes conditions d'application. L'âme peut ainsi comprendre les additifs suivants dans les proportions pondérales suivantes, exprimées en parts pour 100 parts en poids de plâtre :
- 0,1 à 50 parts d'un agent d'adhésion dont la fonction est d'augmenter l'adhésion du revêtement en papier avec le plâtre, par exemple un pol(acétate de vinyl), un poly(alcool vinylique), un amidon, notamment un amidon natif ou modifié par un traitement chimique au moyen d'un acide ou d'une base ou pré-gélatinisé, une dextrine ou une farine végétale, notamment de blé ou de maïs, de préférence 0,1 à 15 parts,
- 0,001 à 10 parts d'un accélérateur de prise, par exemple le sulfate de calcium hydraté ou le sulfate de potassium,
- 0,001 à 10 parts d'un retardateur de prise,
- 0 à 50 parts d'un agent améliorant les propriétés mécaniques, par exemple une résine polyester, polyuréthane ou epoxy, un polymère d'acétate de vinyle sous forme d'homopolymère ou de copolymère, une polyvinylpyrrolidone, par exemple réticulée avec un polystyrène sulfonate, un poly(alcool polyvinylique), un copolymère styrène-butadiène, un polymère d'acide (méth)acrylique ou de (méth)acrylate, et une cellulose modifiée, notamment une méthyl cellulose ou une hydroxyéthyl méthyl cellulose,
- 0 à 10 parts d'un biocide, par exemple les carbamates, tel que le 3-iodoprop-2-yn-1-yl butylcarbamate, ou les complexes de pyrothione tel que le sodium omadine,
- 0 à 10 parts d'au moins un agent hydrofugeant, par exemple un siloxane, un polysiloxane ou une cire,
- 0 à 20 parts d'au moins un agent anti-feu, par exemple la vermiculite, la silice, notamment de dimension micrométrique ou une argile,
- 0 à 20 parts d'au moins un agent de renforcement, par exemple des fibres de polymère, des fibres minérales, notamment en verre, ou végétales, et
- 0 à 40 parts d'un agent améliorant les propriétés acoustiques, par exemple un acétate de vinyle ou un polyvinyle butyral (PVB).

La plaque de plâtre selon l'invention présente un coefficient d'absorption acoustique αₙ au moins égal à 0,15 à une fréquence égale à 1050 Hz, de préférence au moins égal à 0,17.

Un autre objet de l'invention concerne un procédé de fabrication de la plaque à base de plâtre, notamment du type comportant une âme disposée entre deux couches de papier ou de non-tissé qui vient d'être décrite.

Le procédé est caractérisé en ce que, pour réaliser l'âme de la plaque, un matériau particulaire présentant une porosité supérieure à 5 % et inférieure ou égale à 60 % et des pores ayant un diamètre qui varie de 1 à 100 nanomètres est ajouté à du gypse calciné, dont le matériau particulaire représente 0,001 à 50 % en poids du mélange constitué par le plâtre et le matériau particulaire, et le matériau particulaire est inorganique choisi parmi les charbons actifs et les carbonates, ou organique.

La fabrication des plaques à base de plâtre est connue en soi. La plaque de plâtre est formée selon un procédé en continu qui consiste à mélanger du gypse calciné en poudre (hémihydrate de sulfate de calcium) avec de l'eau pour former une pâte qui est déposée en continu entre deux feuilles de papier ou de non-tissé contenant des fibres minérales, notamment de verre, ou des fibres de polymère.

Le produit formé est pressé pour obtenir l'épaisseur désirée, puis il est transporté en continu sur un convoyeur sur une distance permettant à la pâte d'atteindre un niveau de durcissement suffisant pour pouvoir être découpé en plaques de longueur déterminée. Les plaques sont ensuite séchées dans une étuve afin d'éliminer l'excès d'eau.

Classiquement, l'hémihydrate de sulfate de calcium (CaSO₄.0,5 H₂O ; gypse calciné), qu'il soit naturel ou synthétique c'est-à-dire issu notamment de la désulfuration des gaz de centrales thermiques, subit une réaction d'hydratation en présence d'eau et se transforme en dihydrate de sulfate de calcium (CaSO₄.2 H₂O : gypse).

La quantité de gypse calciné mis en oeuvre pour former la pâte varie généralement de 50 à 150 parts en poids pour 100 parts en poids d'eau et de préférence de 60 à 120 parts.

Le matériau particulaire est généralement utilisé sous la forme d'une poudre qui peut être présente dans l'âme en plâtre ou dans le papier ou le non-tissé.

Lorsque le matériau particulaire est présent dans l'âme en plâtre, celui-ci est soit incorporé à la pâte en mélange avec l'hémihydrate de sulfate de calcium de manière à obtenir une distribution dans toute l'épaisseur de la plaque de plâtre, soit déposé sur au moins une face de la plaque avant le dépôt de la feuille de papier ou de non-tissé, par exemple au moyen d'un rouleau, de sorte que le matériau particulaire n'est présent qu'en surface de la plaque.

L'épaisseur de la plaque à base de plâtre est de préférence au plus égale à 12,5 mm, avantageusement de l'ordre de 6 mm, mais on ne saurait exclure une épaisseur supérieure pouvant aller notamment jusqu'à 25 millimètres.

La plaque à base de plâtre conforme à l'invention peut être utilisée telle quelle ou en association avec un autre matériau, par exemple une laine minérale ou de bois, ou un polymère pour former un panneau acoustique et/ou thermique, ou encore un film polymère intercalaire assurant la liaison entre deux plaques à base de plâtre pour former panneau composite.

Cette plaque peut être utilisée pour former des parements muraux, des faux-plafonds, des planchers et des cloisons de séparation.

Comme indiqué précédemment, le matériau particulaire précité permet de conférer à la plaque de plâtre un coefficient d'absorption acoustique αₙ au moins égal à 15 à une fréquence égale à 1050 Hz, de préférence au moins égal à 0,17.

La composition adaptée à la fabrication de la plaque à base de plâtre décrite précédemment constitue aussi un objet de la présente invention. Cette composition à base de plâtre comprend du gypse calciné et un matériau particulaire présentant une porosité au moins égale à 5 % et inférieure ou égale à 60 % et des pores ayant un diamètre qui varie de 1 à 100 nanomètres, dont le matériau particulaire représente 0,001 à 50 % en poids du mélange constitué par le plâtre et le matériau particulaire, et le matériau particulaire est inorganique choisi parmi les charbons actifs et les carbonates, ou organique.

La composition peut être utilisée en outre en tant que composition de plâtre, notamment pour la réalisation de joints ou d'enduits.

Les exemples qui suivent permettent d'illustrer l'invention sans toutefois la limiter.

### EXEMPLES 1 ET 2

Dans un mélangeur, on introduit 1000 g d'hémihydrate de sulfate de calcium, 111 g de matériau particulaire et 800 g d'eau.

Le matériau particulaire selon l'invention est un charbon actif ayant une porosité égale à 10,1 % qui contient des pores de diamètre moyen de 2,3 nm en adsorption et de 2,3 nm en désorption. Sa surface spécifique est de 1150,9 m²/g et le volume moyen des pores est de 0,4 cm³/g (Exemple 1; référence Carbo Tech 4011 commercialisé par la société Carbo Tech AC GmbH) ou un carbonate de calcium ayant une porosité égale à 9 % qui contient des pores ayant un diamètre moyen de 10,8 nm en adsorption et de 10,9 nm en désorption. Sa surface spécifique est de 27 m²/g et le volume moyen des pores est de 1,8 cm³/g (Exemple 2; référence Omyabrite 1300X OM commercialisé par la société Omnya).

A titre de comparaison, on utilise comme matériau particulaire un charbon actif ayant une porosité égale à 4,5 % qui contient des pores de diamètre moyen de 2,9 nm en adsorption et de 2,7 nm en désorption. Sa surface spécifique est de 798,1 m²/g et le volume moyen des pores est de 0,1 cm³/g (Exemple comparatif 1; référence 207C granules commercialisé par la société Chemviron), un graphite ayant une porosité égale à 44,6 % qui contient des pores de diamètre moyen de 19,2 nm en adsorption et de 10,8 nm en désorption. Sa surface spécifique est de 25,4 m²/g et le volume moyen des pores est de 0,2 cm³/g (Exemple comparatif 2 ; référence Ecophit M3000 commercialisé par la société SGL Carbon Group) ; un silicagel ayant une porosité égale à 27,7 % qui contient des pores ayant un diamètre moyen de 30,4 nm en adsorption et de 11,8 nm en désorption. Sa surface spécifique est de 21,1 m²/g et le volume moyen des pores est de 0,2 cm³/g (Exemple comparatif 3 ; référence Upasil 40 0.2 commercialisé par la société Upag AG) ; ou une perlite expansée ayant une porosité égale à 90 % qui contient des pores ayant un diamètre moyen de 100,2 µm en adsorption et de 101 µm en désorption. Sa surface spécifique est de 0,3 m²/g (Exemple comparatif 4).

La porosité du matériau particulaire est mesurée selon la norme ISO 15901-1:2005. Le diamètre moyen des pores, la surface spécifique et le volume moyen des pores sont mesurés selon la norme ISO 15901-2:2005.

Le mélange est agité pendant 15 secondes à 600 tours/minute et 45 secondes à 1850 tours/minute afin d'obtenir une pâte.

On dépose la pâte dans moule en laiton comportant 4 cavités parallélépipédiques (longueur : 300 mm; largeur : 30 mm; profondeur : 13 mm) dont les parois internes ont été préalablement revêtues d'une couche d'huile. Les échantillons sont démoulés après 20 minutes, puis laissés à l'air libre pendant 40 minutes et enfin séchés dans une étuve à 40°C jusqu'à ce que leur poids reste constant.

Sur les échantillons, on mesure l'impédance mécanique MIM (« Measurement of Mechanical impédance ») dans les conditions de la norme ISO 16940 :2008(E) et à partir de la courbe de la fréquence d'accélération (dB) en fonction de la fréquence (Hz), on calcule le module d'Young dynamique (en GN/m²).

Dans le tableau 1 figurent les valeurs du module d'Young et du gain acoustique calculé par rapport à un échantillon (Référence) ne contenant aucun matériau particulaire, préparé dans les conditions décrites précédemment.

On mesure ensuite le coefficient d'absorption sous incidence normale selon la méthode du Tube de Kundt décrite dans la norme ISO-10534 pour différentes fréquences sur les échantillons réduits en poudre. Les résultats sont donnés dans le tableau 1.

**Tableau 1**

| | | Ex. 1 | Ex. 2 | Ex. Comp. 1 | Ex. Comp. 2 | Ex. Comp. 3 | Ex. Comp. 4 | Référence |
|---|---|---|---|---|---|---|---|---|
| Module Young dynamique (GN/m²) | | 3,41 | 3,40 | 3,74 | 2,92 | 3,10 | 3,90 | 3,88 |
| Gain acoustique (%) | | 12,1 | 12,4 | 3,5 | 24,0 | 20,6 | 0 | - |

| Coefficient d'absorption αₙ | | | | | | | | |
|---|---|---|---|---|---|---|---|---|
| | - à 250 Hz | 0,10 | 0,10 | 0,07 | 0,03 | 0,03 | 0,03 | n.d. |
| | - à 650 Hz | 0,15 | 0,14 | 0,11 | 0,05 | 0,06 | 0,04 | n.d. |
| | - à 1050 Hz | 0,19 | 0,17 | 0,14 | 0,08 | 0,09 | 0,04 | n.d. |

| | | | | | | | | |
|---|---|---|---|---|---|---|---|---|
| n.d. : non déterminé | | | | | | | | |

## Revendications

1. Utilisation d'un matériau particulaire présentant une porosité au moins égale à 5 % et inférieure ou égale à 60 % et des pores ayant un diamètre qui varie de 1 à 100 nanomètres dans une composition à base de gypse calciné destinée à la fabrication d'une plaque à base de plâtre, notamment du type comprenant une âme à base de plâtre disposée entre deux feuilles de papier ou de non-tissé, pour améliorer le confort acoustique, dans laquelle le matériau particulaire représente 0,001 à 50 % en poids du mélange constitué par le plâtre et le matériau particulaire, et le matériau particulaire est inorganique choisi parmi les charbons actifs et les carbonates, ou organique ..

2. Utilisation selon la revendication 1, **caractérisée en ce que** ledit matériau est choisi parmi les carbonates de calcium.

3. Utilisation selon la revendication 1, **caractérisée en ce que** ledit matériau est un polymère obtenu à partir d'au moins un monomère choisi parmi les (méth)acrylates, notamment le butyl (méth)acrylate, l'hexyl acrylate, l'hydroxyméthyl méthacrylate, l'éthylène diméthacrylate, le 1,3-butanediol diacrylate, le 1,4-butanediol diacrylate, le triméthylolpropane triméthacrylate et le glycidyl méthacrylate; le styrène et les divinylbenzènes.

4. Utilisation selon l'une des revendications 1 à 3, **caractérisée en ce que** la porosité du matériau particulaire varie de 8 à 40 %.

5. Utilisation selon l'une des revendications 1 à 4, **caractérisée en ce que** le diamètre des pores du matériau particulaire est au plus égal à 90 nanomètres, et de préférence compris entre 5 et 80 nanomètres.

6. Utilisation selon l'une des revendications 1 à 5, **caractérisée en ce que** le matériau particulaire se présente sous la forme d'une poudre constituée de particules ayant une taille comprise entre 1 micromètre et 1 millimètre et avantageusement entre 10 et 600 micromètres.

7. Utilisation selon l'une des revendications 1 à 6, **caractérisée en ce que** le matériau particulaire représente 0,1 à 40 % en poids du mélange constitué par le plâtre et le matériau particulaire, de préférence 1 à 30 %, avantageusement 2 à 20 %.

8. Utilisation selon l'une des revendications 1 à 7, **caractérisée en ce que** le matériau particulaire est réparti uniformément dans l'âme de la plaque de plâtre.

9. Utilisation selon l'une des revendications 1 à 8, **caractérisée en ce que** l'âme comprend les additifs suivants dans les proportions pondérales suivantes, exprimées en parts pour 100 parts en poids de plâtre :
- 0,1 à 50 parts d'un agent d'adhésion dont la fonction est d'augmenter l'adhésion du revêtement en papier avec le plâtre, par exemple un amidon, notamment préalablement traité avec un acide, une dextrine ou une farine végétale, notamment de blé ou de maïs, de préférence 0,1 à 15 parts,
- 0,001 à 10 parts d'un accélérateur de prise, par exemple le sulfate de calcium hydraté ou le sulfate de potassium,
- 0,001 à 10 parts d'un retardateur de prise,
- 0 à 50 parts d'un agent améliorant les propriétés mécaniques, par exemple une résine polyester, polyuréthane ou epoxy, un polymère d'acétate de vinyle sous forme d'homopolymère ou de copolymère, une polyvinylpyrrolidone, un poly(alcool polyvinylique), un copolymère styrène-butadiène, un polymère d'acide (méth)acrylique ou de (méth)acrylate, et une cellulose modifiée,
- 0 à 10 parts d'un biocide,
- 0 à 10 parts d'au moins un agent hydrofugeant,
- 0 à 20 parts d'au moins un agent anti-feu,
- 0 à 20 parts d'au moins un agent de renforcement, et
- 0 à 40 parts d'un agent améliorant les propriétés acoustiques.

10. Utilisation selon l'une des revendications 1 à 9, **caractérisée en ce que la plaque** présente un coefficient d'absorption acoustique αₙ au moins égal à 0,15 à une fréquence égale à 1050 Hz, de préférence au moins égal à 0,17.

11. Procédé de fabrication d'une plaque, notamment du type comportant une âme disposée entre deux feuilles de papier ou de non-tissé, dans lequel on mélange du gypse calciné en poudre avec de l'eau pour former une pâte, on dépose la pâte en continu entre lesdites feuilles, on presse le produit formé pour obtenir l'épaisseur désirée, on découpe les plaques à la longueur désirée, **caractérisé en ce que** pour réaliser l'âme de la plaque on ajoute au gypse calciné un matériau particulaire présentant une porosité au moins égale à 5 % et inférieure ou égale à 60 % et des pores ayant un diamètre qui varie de 1 à 100 nanomètres, pour améliorer le confort acoustique, **en ce que** le matériau particulaire représente 0,001 à 50 % en poids du mélange constitué par le plâtre et le matériau particulaire, et **en ce que** le matériau particulaire est inorganique choisi parmi les charbons actifs et les carbonates, ou organique.

## Patentansprüche

1. Verwendung eines Partikelmaterials, das eine Porosität von mindestens gleich 5 % und kleiner als oder gleich 60 % und Poren, die einen Durchmesser besitzen, der von 1 bis 100 Nanometern variiert, aufweist, in einer Zusammensetzung auf der Basis von kalziniertem Gipsstein, die für die Herstellung einer Platte auf der Basis von Gips bestimmt ist, insbesondere von der Art, umfassend einen Kern auf der Basis von Gips, der zwischen zwei Bögen aus Papier oder Faservlies angeordnet ist, zum Verbessern der Raumakustik, wobei das Partikelmaterial 0,001 bis 50 Gew.-% der Mischung, die aus dem Gips und dem Partikelmaterial besteht, ist und das Partikelmaterial anorganisch, ausgewählt aus Aktivkohlen und Carbonaten, oder organisch ist.

2. Verwendung nach Anspruch 1, **dadurch gekennzeichnet, dass** das Material aus Calciumcarbonaten ausgewählt ist.

3. Verwendung nach Anspruch 1, **dadurch gekennzeichnet, dass** das Material ein Polymer ist, das aus mindestens einem Monomer, ausgewählt aus (Meth)acrylaten, insbesondere Butyl(meth)acrylat, Hexylacrylat, Hydroxymethylmethacrylat, Ethylendimethacrylat, 1,3-Butandioldiacrylat, 1,4-Butandioldiacrylat, Trimethylolpropantrimethacrylat und Glycidylmethacrylat; Styrol und Divinylbenzolen erhalten wird.

4. Verwendung nach einem der Ansprüche 1 bis 3,
**dadurch gekennzeichnet, dass** die Porosität des Partikelmaterials von 8 bis 40 % variiert.

5. Verwendung nach einem der Ansprüche 1 bis 4,
**dadurch gekennzeichnet, dass** der Durchmesser der Poren des Partikelmaterials höchstens gleich 90 Nanometer und vorzugsweise zwischen 5 und 80 Nanometer beträgt.

6. Verwendung nach einem der Ansprüche 1 bis 5,
**dadurch gekennzeichnet, dass** das Partikelmaterial in Form eines Pulvers vorliegt, das aus Partikeln, die eine Größe zwischen 1 Mikrometer und 1 Millimeter und vorteilhafterweise zwischen 10 und 600 Mikrometern besitzen, besteht.

7. Verwendung nach einem der Ansprüche 1 bis 6,
**dadurch gekennzeichnet, dass** das Partikelmaterial 0,1 bis 40 Gew.-%, vorzugsweise 1 bis 30 %, vorteilhafterweise 2 bis 20 %, der Mischung ist, die aus dem Gips und dem Partikelmaterial besteht.

8. Verwendung nach einem der Ansprüche 1 bis 7,
**dadurch gekennzeichnet, dass** das Partikelmaterial gleichmäßig in dem Kern der Gipsplatte verteilt ist.

9. Verwendung nach einem der Ansprüche 1 bis 8,
**dadurch gekennzeichnet, dass** der Kern die folgenden Zusatzstoffe in den folgenden Gewichtsanteilen, ausgedrückt pro 100 Gewichtsteile Gips, umfasst:
- 0,1 bis 50 Teile, vorzugsweise 0,1 bis 15 Teile, eines Haftmittels, dessen Funktion darin besteht, die Haftung der Papierbeschichtung mit der Platte zu erhöhen, beispielsweise einer Stärke, die insbesondere zuvor mit einer Säure behandelt worden ist, eines Dextrins oder eines pflanzlichen Mehls, insbesondere von Weizen oder Mais,
- 0,001 bis 10 Teile eines Abbindebeschleunigers, beispielsweise hydratisiertes Calciumsulfat oder Kaliumsulfat,
- 0,001 bis 10 Teile eines Abbindeverzögerers,
- 0 bis 50 Teile eines Mittels, das die mechanischen Eigenschaften verbessert, beispielsweise ein Polyester-, Polyurethan- oder Epoxidharz, ein Vinylacetatpolymer in Form eines Homopolymers oder Copolymers, Polyvinylpyrrolidon, ein Poly(polyvinylalkohol), ein Styrol-Butadien-Copolymer, ein (Meth)acrylsäure- oder (Meth)acrylatpolymer und eine modifizierte Cellulose,
- 0 bis 10 Teile eines Biozids,
- 0 bis 10 Teile mindestens eines Hydrophobierungsmittels,
- 0 bis 20 Teile mindestens eines Flammschutzmittels,
- 0 bis 20 Teile mindestens eines Verstärkungsmittels und
- 0 bis 40 Teile eines Mittels, das die akustischen Eigenschaften verbessert.

10. Verwendung nach einem der Ansprüche 1 bis 9,
**dadurch gekennzeichnet, dass** die Platte einen Schallabsorptionskoeffizienten αₙ aufweist, der mindestens gleich 0,15, vorzugsweise mindestens gleich 0,17, bei einer Frequenz gleich 1050 Hz beträgt.

11. Verfahren zum Herstellen einer Platte, insbesondere einer Art, die einen Kern vorweist, der zwischen zwei Bögen aus Papier oder Faservlies angeordnet ist, wobei das Pulver aus kalziniertem Gipsstein mit Wasser gemischt wird, um eine Paste auszubilden, wobei die Paste kontinuierlich zwischen den Bögen aufgetragen wird, das ausgebildete Produkt gepresst wird, um die gewünschte Dicke zu erhalten, die Platten auf die gewünschte Länge geschnitten werden, **dadurch gekennzeichnet, dass** zum Erstellen des Kerns der Platte dem calcinierten Gipsstein ein Partikelmaterial, das eine Porosität von mindestens gleich 5 % und kleiner als oder gleich 60 % besitzt und Poren aufweist, die einen Durchmesser besitzen, der von 1 bis 100 Nanometer variiert, hinzugegeben wird, um die Raumakustik zu verbessern, **dass** das Partikelmaterial 0,001 bis 50 Gew.-% der Mischung, die aus dem Gips und dem Partikelmaterial besteht, ist und **dass** das Partikelmaterial anorganisch, ausgewählt aus Aktivkohlen und Carbonaten, oder organisch ist.

## Claims

1. Use of a particulate material having a porosity at least equal to 5% and less than or equal to 60% and pores with a diameter which varies from 1 to 100 nanometers in a calcined gypsum-based composition which is intended for the production of a plaster-based board, in particular of the type comprising a plaster-based core arranged between two sheets of paper or non-woven fabric, in order to improve acoustic comfort, wherein the particulate material represents 0.001 to 50% by weight of the mixture consisting of the plaster and the particulate material, and the particulate material is inorganic, selected from activated carbons and carbonates, or organic.

2. Use according to claim 1, **characterized in that** said material is selected from calcium carbonates.

3. Use according to claim 1, **characterized in that** said material is a polymer obtained from at least one monomer selected from (meth)acrylates, in particular butyl (meth)acrylate, hexyl acrylate, hydroxymethyl methacrylate, ethylene dimethacrylate, 1,3-butanediol diacrylate, 1,4-butanediol diacrylate, trimethylolpropane trimethacrylate and glycidyl methacrylate; styrene and divinylbenzenes.

4. Use according to one of claims 1 to 3, **characterized in that** the porosity of the particulate material varies from 8 to 40%.

5. Use according to one of claims 1 to 4, **characterized in that** the pore diameter of the particulate material is at most equal to 90 nanometers, and preferably between 5 and 80 nanometers.

6. Use according to one of claims 1 to 5, **characterized in that** the particulate material is in the form of a powder consisting of particles having a size of between 1 micrometer and 1 millimeter and advantageously between 10 and 600 micrometers.

7. Use according to one of claims 1 to 6, **characterized in that** the particulate material represents 0.1 to 40% by weight of the mixture consisting of the plaster and the particulate material, preferably 1 to 30%, advantageously 2 to 20%.

8. Use according to one of claims 1 to 7, **characterized in that** the particulate material is uniformly distributed in the core of the plaster board.

9. Use according to one of claims 1 to 8, **characterized in that** the core comprises the following additives in the following weight proportions, expressed in parts per 100 parts by weight of plaster:
- 0.1 to 50 parts of an adhesion agent, the role of which is to increase the adhesion of the paper coating with the plaster, for example a starch, in particular pretreated with an acid, a dextrin or a vegetable flour, in particular wheat or corn flour, preferably 0.1 to 15 parts,
- 0.001 to 10 parts of a setting accelerator, for example hydrated calcium sulfate or potassium sulfate,
- 0.001 to 10 parts of a setting retarder,
- 0 to 50 parts of an agent for improving the mechanical properties, for example a polyester resin, polyurethane resin or epoxy resin, a vinyl acetate polymer in homopolymer or copolymer form, a polyvinylpyrrolidone, a poly(vinyl alcohol), a styrene-butadiene copolymer, a (meth)acrylic acid polymer or (meth)acrylate polymer, and a modified cellulose,
- 0 to 10 parts of a biocide,
- 0 to 10 parts of at least one water repellent,
- 0 to 20 parts of at least one fire retardant,
- 0 to 20 parts of at least one reinforcing agent, and
- 0 to 40 parts of an agent for improving acoustic properties.

10. Use according to one of claims 1 to 9, **characterized in that** the board has a sound absorption coefficient αₙ at least equal to 0.15 at a frequency equal to 1050 Hz, preferably at least equal to 0.17.

11. Method for producing a board, in particular of the type comprising a core arranged between two sheets of paper or non-woven fabric, in which calcined gypsum powder is mixed with water to form a paste, the paste is continuously deposited between said sheets, the product formed is pressed to obtain the desired thickness, and the boards are cut to the desired length,
**characterized in that,** in order to produce the core of the board, a particulate material, having a porosity at least equal to 5% and less than or equal to 60% and pores with a diameter which varies from 1 to 100 nanometers, is added to the calcined gypsum in order to improve acoustic comfort, **in that** the particulate material represents 0.001 to 50% by weight of the mixture consisting of the plaster and the particulate material, and **in that** the particulate material is inorganic, selected from activated carbons and carbonates, or organic.
